# EUROPÄISCHE PATENTSCHRIFT

(11) **EP 2 553 294 B1**
(45) Veröffentlichungstag und Bekanntmachung des Hinweises auf die Patenterteilung: **17.09.2014**
(21) Anmeldenummer: 11710470.3
(22) Anmeldetag: 21.03.2011
(51) Int. Cl.: F16H 1/16, F16H 55/24

(54) **SCHRAUBRADGETRIEBE FÜR EINE LENKUNG EINES KRAFTFAHRZEUGS**
WORM GEARING FOR VEHICLE STEERING
ENGRENAGE HÉLICOÏDAL POUR LA DIRECTION D'UN VÉHICULE

(30) Priorität: 26.03.2010 DE 102010003313
(43) Veröffentlichungstag der Anmeldung: 06.02.2013
(73) Patentinhaber: ZF-Lenksysteme GmbH, 73527 Schwäbisch Gmünd (DE)
(72) Erfinder: FÜCHSEL, Dennis, 73527 Schwäbisch Gmünd (DE); KNEER, Ekkehard, 73240 Wendlingen (DE); HAFERMALZ, Jens, 73116 Wäschenbeuren (DE); KUHLEN, Arne, 73614 Schorndorf (DE); GRAU, Marco, 73527 Schwäbisch Gmünd (DE)
(86) Internationale Anmeldenummer: PCT/EP2011/054199
(87) Internationale Veröffentlichungsnummer: WO 2011/117175

(56) Entgegenhaltungen:
- EP-A1- 1 760 368
- EP-A2- 1 225 116
- DE-A1- 10 161 715
- DE-A1-102004 054 510
- DE-A1-102008 000 506
- DE-A1-102008 001 878
- DE-A1-102008 042 281

## Beschreibung

Die Erfindung betrifft ein Schraubradgetriebe, insbesondere ein Schneckengetriebe, gemäß dem Oberbegriff des Anspruchs 1. Die Erfindung betrifft ferner eine elektrische Hilfskraftlenkung mit einem Schraubradgetriebe gemäß Anspruch 10.

Aus der DE 101 61 715 A1 ist ein gattungsgemäßes Schraubradgetriebe in der Ausgestaltung eines Schneckengetriebes für den Einsatz in einer elektrischen Hilfskraftlenkung bekannt.

Das in der DE 101 61 715 A1 beschriebene Schneckengetriebe ist in einem Gehäuse angeordnet und weist eine Schnecke sowie ein Schneckenrad auf. Die Schnecke ist mittels einer Kupplung mit einer Antriebswelle eines elektrischen Antriebsmotors verbunden. Bei der dort gezeigten Konstruktion ist die Schnecke senkrecht zur Drehachse schwenkbar und in einem Schwenk- bzw. Pendellager gelagert, wodurch das Verzahnungsspiel während der gesamten Lebensdauer des Getriebes konstant gehalten werden kann. Hierzu wird die Schnecke radial mit einer Vorspannungskraft beaufschlagt und permanent gegen die Verzahnung des Schneckenrads (bzw. des Schraubrads) gedrückt. Es hat sich bei solchen Konstruktionen gezeigt, dass Drehrichtungswechsel bzw. Lastwechsel im Getriebe zusammen mit einem vorhandenen Zahnflankenspiel dazu führen können, dass die Zahnflanken des Schraubritzels bzw. der Schnecke mit den Zahnflanken des Schraubrads bzw. des Schneckenrads aufeinander prallen und schlagende Geräusche verursachen. Trotzdem sollte bei der Montage kein zu geringes Zahnflankenspiel eingestellt werden, da dies negativen Einfluss auf den Wirkungsgrad sowie den Verschleiß des Getriebes haben kann. Außerdem können dadurch die Rückführungseigenschaften einer Hilfskraftlenkung verschlechtert werden, was wiederum das Lenkgefühl beim Fahrer verschlechtert.

Die maximale Vorspannung, mit der die Schnecke in das Schneckenrad gedrückt werden kann, ist begrenzt, da es ansonsten zu einer Verklemmung des Schneckenradgetriebes kommen würde.

Die bei elektrischen Lenksystemen eingesetzten Schraubräder- bzw. Schneckenräder sind häufig aus Kunststoff gefertigt. Über die Gebrauchsdauer unterliegen diese Kunststoffteile einem Setzen bzw. einem Verschleiß. Damit die Anfederung der Schnecken gegen das Schneckenrad über die gesamte Gebrauchsdauer gewährleistet ist, wird bei den aus dem allgemeinen Stand der Technik bekannten Schraubrad- bzw. Schneckengetrieben im Neuzustand eine sehr große Anfederkraft aufgebracht, die sich im Laufe der Gebrauchsdauer durch eine Verzahnungsspielzunahme verringert. Dies führt im Neuzustand zu Reibungserhöhungen und somit zu Wirkungsgradnachteilen im Getriebe.

Zum weiteren Stand der Technik wird auf die DE 10 2008 000 506 A1 verwiesen.

Der vorliegenden Erfindung liegt die Aufgabe zugrunde, die vorgenannten Nachteile des Standes der Technik zu lösen, insbesondere eine einfache und kostengünstig zu realisierende Lösung zu schaffen, bei der die Reibung im Getriebe minimiert wird, ein verbesserter Wirkungsgrad erreicht werden kann, die Anfederkraft über die Gebrauchsdauer möglichst konstant ist und eine ungewollte Geräuschentwicklung im Getriebe weitgehend reduziert wird.

Diese Aufgabe wird erfindungsgemäß durch Anspruch 1 gelöst.

Eine vorteilhafte elektrische Hilfskraftlenkung für Kraftfahrzeuge ergibt sich aus Anspruch 10.

Die erfindungsgemäße Lösung führt zu einer Reibungsminimierung im Getriebe und erhöht den Wirkungsgrad, da eine kontinuierliche Anfederung mit nahezu gleichbleibender Anfederkraft während der gesamten Gebrauchsdauer erreicht wird. Es ist nicht notwendig, dass im Neuzustand eine sehr große Anfederkraft aufgebracht wird. Durch die kontinuierliche Anfederung mit einer nahezu gleichbleibenden Anfederkraft werden zudem Klappergeräusche bzw. störende Geräusche über die gesamte Gebrauchsdauer vermieden bzw. weitgehend reduziert. Aufgrund des einfachen Aufbaus der erfindungsgemäßen Lösung werden die Anforderungen an die Montage reduziert. Hierbei ist es von besonderem Vorteil, dass montageseitig keine Einstellung der Anfederung des Schraubritzels bzw. der Schnecke erforderlich ist, da sich die notwendige Anfederung durch die erfindungsgemäße Lösung selbständig einstellt.

Die erfindungsgemäße Lösung erhöht die Robustheit des Schraubradgetriebes und somit der gesamten Hilfskraftlenkung. Aufgrund der sich durch die Erfindung ergebenden selbsttätigen Kompensation von Achsabstandsänderungen sind nur noch geringe Anfederungskräfte erforderlich.

Die erfindungsgemäße Lösung ermöglicht eine Toleranz-, Verschleiß- und Temperaturkompensation im Verzahnungseingriff zwischen dem Schraubritzel und dem Schraubrad über die gesamte Lebensdauer.

Durch die erfindungsgemäße Lösung wird die Funktion "Realisierung des Grundspiels", um insbesondere Temperaturausdehnungen sowie Rundlauftoleranzen zu kompensieren, und die Funktion "Realisierung der Nachstellung", um insbesondere ein Nachstellen zum Beispiel aufgrund von Setzen oder Verschleiß in den Verzahnungskomponenten zu ermöglichen, in besonders vorteilhafter Weise voneinander getrennt.

Das erfindungsgemäße Schraubradgetriebe für eine Lenkung eines Kraftfahrzeugs, vorzugsweise für eine elektrische Lenkung, insbesondere eine elektrische Hilfskraftlenkung eines Kraftfahrzeugs, weist ein Schraubritzel auf, welches in ein Schraubrad eingreift.

Vorgesehen ist dabei, dass ein Lager des Schraubritzels in einer Lagerbuchse gelagert ist. Vorzugsweise ist das Lager, welches von der Lagerbuchse aufgenommen wird, am Ende oder an einem Endbereich des Schraubritzels angeordnet. Erfindungsgemäß ist vorgesehen, dass ein Innenring der Lagerbuchse mit einem Außenring der Lagerbuchse über ein Schwenklager derart verbunden ist, dass eine Schwenkbewegung des Schraubritzels zu dem Schraubrad möglich ist. Zwischen dem Innenring und dem Außenring der Lagerbuchse ist dabei ein Druckstück angeordnet. Das Druckstück ist federbelastet in einem Abschnitt eines Ringspalts zwischen dem Innenring und dem Außenring bewegbar, wobei der Innenring und/oder der Außenring in dem Abschnitt, in dem das Druckstück bewegbar ist, so gestaltet sind, dass sich der Ringspalt zwischen dem Innenring und dem Außenring in die Richtung, in die das Druckstück federbelastet bewegbar ist, verjüngt.

Durch die erfindungsgemäße Lösung wird erreicht, dass sich das Druckstück bei Bedarf selbst nachstellt und somit einen Versatz oder einen Verschleiß in den Verzahnungskomponenten kompensiert. Dies erfolgt dadurch, dass das erfindungsgemäß federbelastete Druckstück in den sich verjüngenden Ringspalt zwischen dem Innenring und dem Außenring gedrückt wird, sobald der Ringspalt, d. h. der Abstand in Radialrichtung zwischen dem Innenring und dem Außenring eine Größe erreicht hat, die es ermöglicht, dass das Druckstück in diesen eindringt. Eine Vergrößerung des Ringspalts bzw. eine Vergrößerung der Höhe des Ringspalts, die sich durch den Abstand zwischen dem Innenring und dem Außenring ergibt, kann dann auftreten, wenn sich das Schraubrad und das Schraubritzel aufeinander zu bewegen bzw. sich der Abstand zueinander verringert. Das Druckstück ist dabei vorzugsweise in einem Winkelbereich des Innenrings angeordnet, der dem Schneckenrad abgewandt ist. In diesem Bereich vergrößert sich der Ringspalt signifikant, wenn sich das Schraubritzel dem Schraubrad weiter annähert.

Aufgrund der federbelasteten Nachstellung des Druckstücks in dem Ringspalt ist sichergestellt, dass das Druckstück, wenn das Schraubradgetriebe betrieben wird, zumindest über ein Teilstück seiner Fläche zwischen dem Innenring und dem Außenring eingeklemmt ist. Das Druckstück kann dabei aus einem geeigneten Material, vorzugsweise einem Elastomer gebildet sein, welches bei Belastung eine spezielle Federkennlinie erzeugt. Diese Federkennlinie kann zusätzlich oder alternativ zu den Werkstoffeigenschaften auch durch die Geometrie der Bauteile, z. B. Nuten, Stege, Durchbrüche, Hohlräume und dergleichen, realisiert oder unterstützt werden. Von Vorteil ist es dabei, wenn die Federkennlinie derart gestaltet ist, dass sich am Anfang der Kennlinie bei kleinen Wegen die Kraft wenig ändert und sich danach bei kleinen Wegen die Kraft sehr stark ändert (progressive Kennlinie). Damit ist gewährleistet, dass die Rundlauffehler und die Wärmedehnung der Komponenten des Schraubradgetriebes die Reibung im Getriebe nicht erhöhen. Durch die progressive Kennlinie wird zudem vermieden, dass das Schraubritzel aus der Verzahnung des Schraubrades wandert. Alternativ oder ergänzend zu einer Ausgestaltung des Druckstücks aus einem geeigneten Werkstoff kann auch vorgesehen sein, dass wenigstens die Fläche des Innenrings und/oder des Außenrings, mit dem das Druckstück in Kontakt steht, aus einem geeigneten Werkstoff gebildet ist, vorzugsweise einem Elastomer, welcher bzw. welches bei Belastung eine Kennlinie aufweist, die geeignet ist, das Grundspiel sicherzustellen. Dabei kann auch vorgesehen sein, dass die Flächen des Innenrings oder des Außenrings über geeignete, die elastische Eigenschaft herstellende oder unterstützende Stege, Nuten, Durchbrüche, Hohlräume oder dergleichen verfügen.

Erfindungsgemäß kann somit vorgesehen sein, dass durch das Druckstück und/oder die angrenzenden Flächen des Innen- und/oder Außenrings das Grundspiel sichergestellt wird, durch welches Ausdehnungen sowie die Rundlauftoleranzen der Komponenten des Schraubradgetriebes ausgeglichen werden können. Von Vorteil ist dabei, wenn das Grundspiel eine genau definierte Untergrenze sowie eine genau definierte Obergrenze aufweist, die möglichst nicht unter- bzw. überschritten wird.

Sobald aufgrund von Verschleiß oder dergleichen die Höhe des Ringspalts (radialer Abstand zwischen Innenring und Außenring) zu groß werden sollte und somit das Druckstück die Funktion des Grundspiels nicht mehr erfüllen kann, wird das Druckstück durch die Federbelastung in Umfangsrichtung innerhalb des Ringspalts auf einer wenigstens annähernd kreis- oder ringförmigen Bahn zwischen dem Innenring und dem Außenring bewegt, so dass das Druckstück weiter in den sich verjüngenden Ringspalt eindringt bzw. soweit vordringt, bis das Druckstück in dem Ringspalt wieder zwischen dem Außenumfang des Innenrings und dem Innenumfang des Außenrings eingeklemmt ist. Somit kann das Druckstück wieder die Funktion des Grundspiels erfüllen.

Die erfindungsgemäße Lösung ermöglicht es somit, dass ein Spiel im Schraubradgetriebe, welches sich unter anderem durch Setzen/Verschleiß/Bauteiltoleranzen ergeben kann, so nachgestellt bzw. ausgeglichen wird, dass das Druckstück in allen Betriebszuständen sicherstellt, dass das Schraubritzel mit einer genau definierten Kraft in Richtung Schraubrad beaufschlagt wird.

Von Vorteil ist es, wenn der Innenring und/oder der Außenring wenigstens in einem Teilstück des Abschnitts, in dem das Druckstück federbelastet bewegbar ist, eine schräg oder stufenförmig verlaufende Anlagefläche aufweist.

Durch die Ausbildung einer schräg oder stufenförmig verlaufenden Anlagefläche wird in einfacher Weise erreicht, dass sich der Ringspalt vorzugsweise kontinuierlich bzw. gleichmäßig verjüngt.

Unter einer schräg oder stufenförmig verlaufenden Anlagefläche ist dabei zu verstehen, dass der Außenring und/oder der Innenring in diesem Abschnitt von einer im Wesentlichen kreisförmigen Form abweicht.

Von Vorteil ist es, wenn das Druckstück eine an die Anlagefläche des Innenrings oder des Außenrings angepasste und darauf ausgerichtete schräg oder stufenförmig verlaufende Anlagefläche aufweist.

Diese Ausgestaltung ermöglicht es, dass das Druckstück besonders einfach in den sich verjüngenden Ringspalt eindringen kann bzw. an der feststehenden schrägen oder stufenförmig verlaufenden Anlagefläche des Außenrings oder des Innenrings entlang gleitet.

Das Druckstück bildet somit eine bewegliche schräge Anlagefläche aus, während der Innenring oder der Außenring eine feststehende schräge Anlagefläche aufweist.

Die feststehende schräge Fläche kann vorzugsweise am Außenring ausgebildet sein. Es ist jedoch auch möglich, die feststehende schräge Fläche am Innenring oder an beiden Ringen auszubilden.

Wenn die schräg oder stufenförmig verlaufenden Anlageflächen aufeinandertreffen, gleiten sie aneinander ab. Dabei führt der Innenring eine Schwenkbewegung aus, wodurch das Schraubritzel in das Schraubrad gedrückt wird. Die Anpresskraft richtet sich nach dem Winkel der schrägen Anlageflächen und der Federkraft, mit der das Druckstück federbelastet ist.

Von Vorteil ist es, wenn das Druckstück auf einer Führungsbahn auf dem Außenumfang des Innenrings oder dem Innenumfang des Außenrings geführt verschiebbar ist. Von Vorteil ist es dabei, wenn die Führungsbahn eine formschlüssige Verbindung zwischen dem Druckstück und dem Innenring oder dem Außenring ermöglicht, jedoch eine Verschiebung des Druckstücks in Umfangsrichtung zwischen den Ringen erlaubt. Die formschlüssige Verbindung zwischen dem Innenring oder dem Außenring und dem Druckstück ermöglicht es, dass das Druckstück geführt im Ringspalt eine Winkelbewegung auf einer Ringbahn ausführen kann. Die formschlüssige Verbindung kann nur auf einem Kreissegment des Außenrings oder des Innenrings oder auch vollumlaufend auf dem jeweiligen Ring vorhanden sein.

Von Vorteil ist es, wenn eine Feder vorgesehen ist, vorzugsweise eine Ringfeder, wobei ein Ende der Feder am Innenring oder Außenring und das andere Ende am Druckstück angreift. Dabei ist vorzugsweise vorgesehen, dass die Feder an dem Ring (Innenring oder Außenring) angreift, auf dessen Führungsbahn das Druckstück geführt verschiebbar ist.

Von Vorteil ist es, wenn ein Sicherungsbolzen vorgesehen ist, welcher das Druckstück gegenüber dem Innenring oder dem Außenring unbeweglich fixiert. Dadurch lässt sich vermeiden, dass die Feder das Druckstück verschiebt, bevor das Schraubradgetriebe montiert ist. Erst nach der vollständigen Montage der Baugruppe des Schraubradgetriebes bzw. erst dann, wenn dies gewünscht ist, wird der Sicherungsbolzen entfernt. Wenn der Sicherungsbolzen entfernt wird, bewegt sich das Druckstück durch die gespannte Feder auf der Ringbahn auf die feststehende schräge Fläche (des Außenrings und/oder des Innenrings) zu und schwenkt damit den Innenring in Richtung Schraubrad. Damit ist das Getriebe aus den toleranzbehafteten Einzelteilen spielfrei eingestellt. Wenn ein Verschleißt entsteht, wird das Druckstück durch die Feder nachgeschoben und der spielfreie Zustand ist weiterhin vorhanden.

Von Vorteil ist es, wenn der mit der Führungsbahn versehene Ring mittels des Sicherungsbolzens mit dem Druckstück verbunden ist. Von Vorteil ist es ferner, wenn der Sicherungsbolzen auch noch nach der Montage aller Getriebebauteile aus dem Gehäuse des Schraubradgetriebes herausragt, so dass der Sicherungsbolzen einfach entfernt werden kann.

Von Vorteil ist es, wenn das Druckstück und/oder die Anlagefläche des Innenrings und/oder des Außenrings aus einem Elastomer gebildet ist. Dadurch lässt sich das Grundspiel besonders einfach realisieren.

Von Vorteil ist es ferner, wenn das Druckstück und/oder die Anlagefläche des Innenrings und/oder des Außenrings Nuten und/oder Durchbrüche und/oder Hohlräume und/oder Stege aufweist. Dadurch wird die Herstellung des Grundspiels vereinfacht. Beispielsweise erleichtern Stege, Durchbrüche, Nuten oder Hohlräume ein Einfedern. Dabei kann auch vorgesehen sein, dass das Druckstück und/oder die Anlageflächen aus Elastomeren mit unterschiedlichen Härten (Weichkomponenten und Hartkomponenten) gebildet sind.

Von Vorteil ist es, wenn das Druckstück in einem Bereich bzw. einem Winkelabschnitt über den Innenring auf das Schraubritzel einwirkt, der von dem Schraubrad abgewandt ist. Ferner ist es von Vorteil, wenn das Schwenklager, welches den Außenring der Lagerbuchse mit dem Innenring verbindet, auf einer Radialen des Schraubritzels liegt, welche im Wesentlichen parallel zu der Achse des Schraubrades verläuft. Dabei kann es von Vorteil sein, wenn in einem Winkelabschnitts des Ringspalts zwischen dem Innenring und dem Außenring, der dem Ringspalt, in dem das Schwenklager angeordnet ist, gegenüberliegt (d. h. um 180° verdreht angeordnet ist), ein Anschlag ausgebildet ist, der eine Bewegung des Innenrings in diese Richtung im Wesentlichen verhindert. Vorzugsweise wird die Bewegungsmöglichkeit des Innenrings in Richtung auf den Außenring an dieser Stelle auf ein Zehntel Millimeter reduziert.

Zur Lagerung des Schraubritzels ist vorzugsweise ein zweites Lager vorgesehen, welches das Schraubritzel vorzugsweise am anderen Ende lagert. Hierbei ist der Einsatz eines Festlagers von Vorteil, welches vorzugsweise einen kleinen Schwenkwinkel zulässt, so dass die durch den Innenring der Lagerbuchse bewirkte Schwenkbewegung des Schraubritzels nicht behindert wird. Die festlagerseitige Lagerung des Schraubritzels erfolgt vorzugsweise durch ein Wälzlager.

Von Vorteil ist es, wenn das Schraubradgetriebe als Schneckengetriebe ausgebildet ist, wobei das Schraubrad als Schneckenrad und das Schraubritzel als Schnecke ausgebildet ist und wobei die Schnecke mit dem Schneckenrad in Eingriff steht.

Ferner ist es von Vorteil, wenn eine elektrische Hilfskraftlenkung für Kraftfahrzeuge mit einem Schraubradgetriebe bzw. einem Schneckenradgetriebe realisiert wird, das eines oder mehrere Merkmale des vorstehend beschriebenen Schraubradgetriebes bzw. Schneckengetriebes aufweist.

Vorteilhafte Ausgestaltungen ergeben sich aus den weiteren abhängigen Ansprüchen. Nachfolgend ist ein Ausführungsbeispiel der Erfindung anhand der Zeichnung prinzipmäßig dargestellt.

Es zeigt:
Figur 1 einen prinzipmäßigen Aufbau eines Schraubradgetriebes;
Figur 2 einen vergrößerten Schnitt durch das Ende des Schraubritzels, das in der erfindungsgemäßen Lagerbuchse gelagert ist;
Figur 3 einen Schnitt durch das Schraubritzel mit der erfindungsgemäßen Lagerbuchse;
Figur 4 eine prinzipmäßige Darstellung der erfindungsgemäßen Lagerbuchse;
Figur 5 eine Detaildarstellung der erfindungsgemäßen Lagerbuchse;
Figur 6 einen Schnitt nach der Linie VI-VI der Figur 5;
Figur 7 einen Querschnitt durch einen Innenring der Lagerbuchse mit einer Führungsbahn für das Druckstück;
Figur 8 eine perspektivische Darstellung eines Abschnitts des Innenrings mit der Führungsbahn für das Druckstück, und
Figur 9 eine perspektivische Darstellung des Druckstücks von unten.

Der grundsätzliche Aufbau eines Schraubradgetriebes bzw. eines Schneckengetriebes, insbesondere auch für dessen Einsatz in einer elektrischen Hilfskraftlenkung für Kraftfahrzeuge, ist aus dem allgemeinen Stand der Technik hinlänglich bekannt, wozu beispielsweise auf die DE 101 61 715 A1 und die DE 10 2008 000 506 A1 verwiesen wird, weshalb nachfolgend nur die für die Erfindung wesentlichen Merkmale näher beschrieben werden.

Im Rahmen der Erfindung und des nachfolgend dargestellten Ausführungsbeispiels soll durch die Offenbarung der Erfindung anhand eines Schraubradgetriebes analog auch ein Schneckengetriebe als offenbart angesehen werden. Dabei entspricht das Schraubritzel der Schnecke und das Schraubrad dem Schneckenrad.

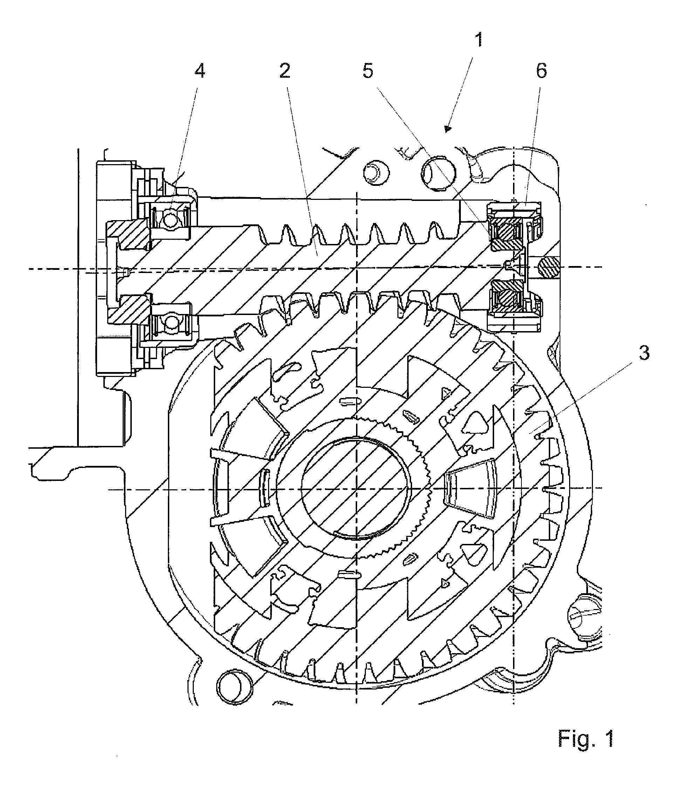

Figur 1 zeigt ein Schraubradgetriebe 1 einer nicht näher dargestellten Lenkung, insbesondere einer elektrischen Hilfskraftlenkung eines Kraftfahrzeugs. Das Schraubradgetriebe 1 weist ein Schraubritzel 2 auf, welches in ein Schraubrad 3 eingreift. Das Schraubrad 3 ist im Ausführungsbeispiel aus Kunststoff gebildet.

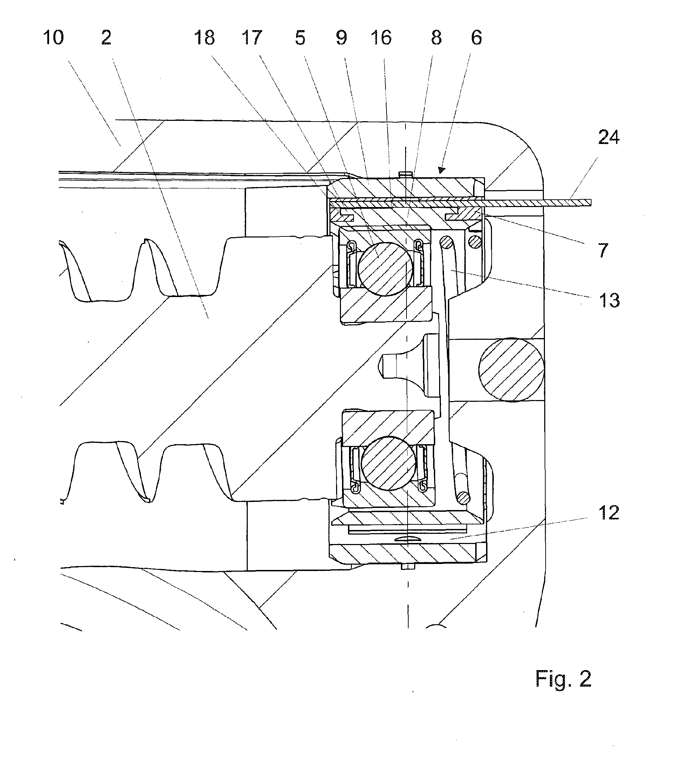

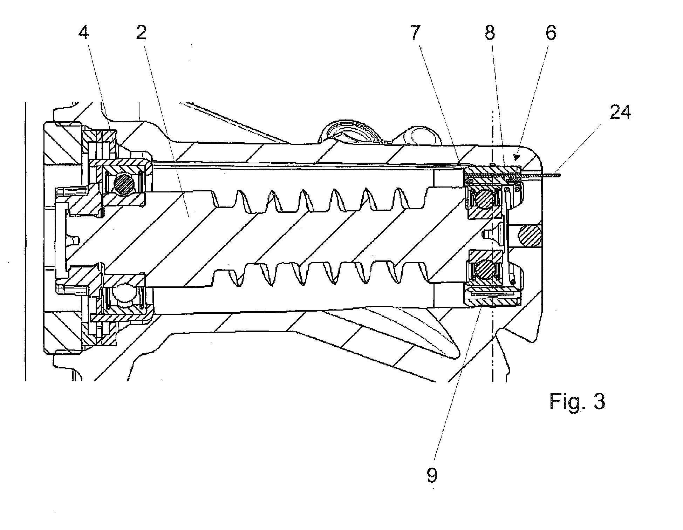

Die Lagerung des Schraubritzels 2 erfolgt festlagerseitig durch ein Wälzlager 4, welches einen kleinen Schwenkwinkel zulässt. Das Schraubritzel 2 kann an diesem Ende über eine Kupplung mit einer Antriebswelle eines elektrischen Antriebsmotors verbunden sein. Das andere Ende des Schraubritzels 2 ist in einem Loslager 5 gelagert. Im Ausführungsbeispiel ist das Loslager 5 ebenfalls durch ein Wälzlager realisiert. Der Außenring des Wälzlagers 5 wird in einer erfindungsgemäß nachstellenden Lagerbuchse 6 radial fixiert. Die Lagerbuchse 6 ist dabei in Richtung Schraubrad 3 schwenkbar. Das Schraubritzel 2 wird über das Wälzlager 5 und die nachstellende Lagerbuchse 6 durch ein federbelastetes Druckstück 7 mit einer bestimmten Kraft in die Verzahnung des Schraubrads 3 gedrückt (seihe Figuren 2 bis 9). Wie sich aus den Figuren 2 bis 9 näher ergibt, ist das Druckstück 7 zwischen einem Innenring 8 und einem Außenring 9 der Lagerbuchse 6 angeordnet.

Die Lagerung des Schraubritzels 2 und des Schraubrads 3 erfolgt in einem Gehäuse 10. Wie sich aus den Figuren 2 bis 9 im Detail ergibt, ist der Außenring 9 der Lagerbuchse 6 in das Gehäuse 10 eingepresst. Der Innenring 8 der Lagerbuchse 6 nimmt dabei das Wälzlager 5 auf.

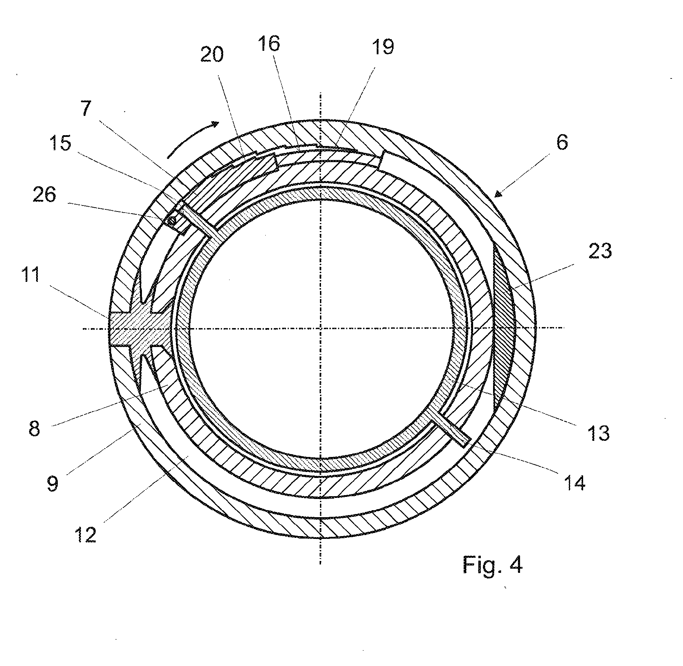

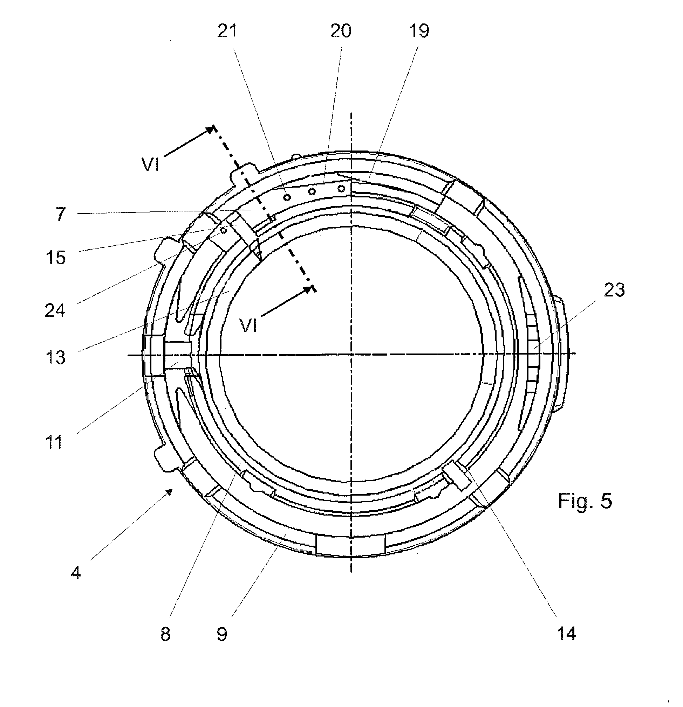

Der Innenring 8 und der Außenring 9 sind über ein Schwenklager 11 verbunden (siehe Figur 4 und Figur 5). Das Schwenklager 11 ermöglicht eine Schwenkbewegung des Schraubritzels 2 zum Schraubrad 3. Das Schwenklager 11 ist gegenüber dem Angriffspunkt des Druckstücks 7 um 90° um die Rotationsachse des Schraubrads 3 verdreht zwischen dem Innenring 8 und dem Außenring 9 angeordnet.

Das Schwenklager 11 kann in einer besonders einfachen Ausgestaltung als Schwenkpunkt ausgebildet sein. Es hat sich jedoch als vorteilhaft herausgestellt, wenn das Schwenklager 11 eine Form aufweist, so wie dies prinzipmäßig in Figur 4 und im Detail in Figur 5 dargestellt ist. Dadurch ergibt sich eine besonders gute und stabile Anbindung zwischen dem Innenring 8 und dem Außenring 9. Das Schwenklager 11 liegt im Ausführungsbeispiel auf einer im Wesentlichen parallel zur Achse des Schraubrads 3 verlaufenden Radialen der Lagerbuchse 6 (d. h. in Figur 1 senkrecht zur Zeichnungsebene).

Die Anordnung des Druckstücks 7 zwischen dem Innenring 8 und dem Außenring 9 der Lagerbuchse 6 ergibt sich besonders gut aus den Figuren 2, 4 und 5. Das Druckstück 7 befindet sich dabei in einem Ringspalt 12 zwischen dem Innenring 8 und dem Außenring 9. Das Druckstück 7 befindet sich in einem Winkelbereich zwischen dem Innenring 8 und dem Außenring 9, der von dem Schraubrad 3 abgewandt ist, so dass sich Abstandsänderungen zwischen dem Schraubritzel 2 und dem Schraubrad 3, beispielsweise bedingt durch ein Setzen oder einen Verschleiß, möglichst signifikant auf den Ringspalt 12, insbesondere dessen Höhe, d. h. den Abstand zwischen dem Innenring 8 und dem Außenring 9, auswirken.

Wie sich ferner insbesondere aus den Figuren 4 und 5 ergibt, verjüngt sich der Ringspalt 12 in eine Richtung, in die sich das Druckstück 7 federbelastet bewegen kann. Die Bewegungsrichtung des Druckstücks 7 ist in Figur 4 durch den Pfeil dargestellt. Aufgrund der Federbelastung wird das Druckstück 7 gezwungen, in den Ringspalt 12 einzudringen. Das Druckstück 7 kann jedoch nur so weit in den Ringspalt 12 eindringen, bis das Druckstück 7 zwischen dem Innenring 8 und dem Außenring 9 eingeklemmt ist. Erst wenn sich durch ein Setzen oder einen Verschleiß zwischen dem Schraubritzel 2 und dem Schraubrad 3 der Ringspalt 12 in dem Abschnitt vergrößert, in dem das Druckstück 7 angeordnet ist, kann das Druckstück 7 aufgrund der Federbelastung weiter in den sich verjüngenden Ringspalt 12 nach vorne geschoben werden. Sobald das Druckstück 7 dabei wieder zwischen dem Innenring 8 und dem Außenring 9 eingeklemmt ist, wird die Bewegung gestoppt.

Wie aus den Figuren 4 und 5 ersichtlich ist, wird das Druckstück 7 durch eine Feder, im Ausführungsbeispiel eine Ringfeder 13, mit einer Kraft beaufschlagt. Im Ausführungsbeispiel ist die Ringfeder 13 gespannt, in dem das eine Ende der Ringfeder 13 im Druckstück 7 und das andere Ende im Innenring 8 eingerastet ist. Das Einrasten der Ringfeder 13 erfolgt im Ausführungsbeispiel dadurch, dass die gespannte Ringfeder 13 mit dem einen Ende in eine Nut 14 des Innenrings 8 einrastet und das andere Ende der Ringfeder 13 in eine Nut 15 des Druckstücks 7 geschoben wird. Durch die Federkraft liegen die Enden der Ringfeder 13 auf einer Nutseite an, wodurch die Ringfeder 13 in der nachstellenden Lagerbuchse 6 gehalten wird.

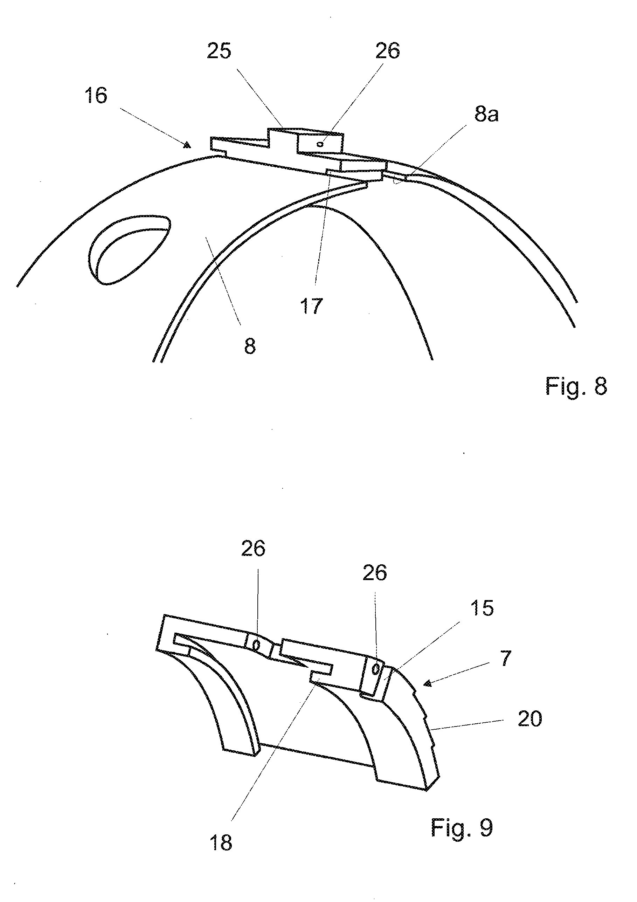

Wie sich aus Figur 8 ergibt, weist der Innenring 8 eine Aussparung 8a auf, die es ermöglicht, dass ein Ende der Ringfeder 13 in die Nut 15 des Druckstücks 7 einrasten kann, ohne dass die Bewegung des Druckstücks 7 behindert wird.

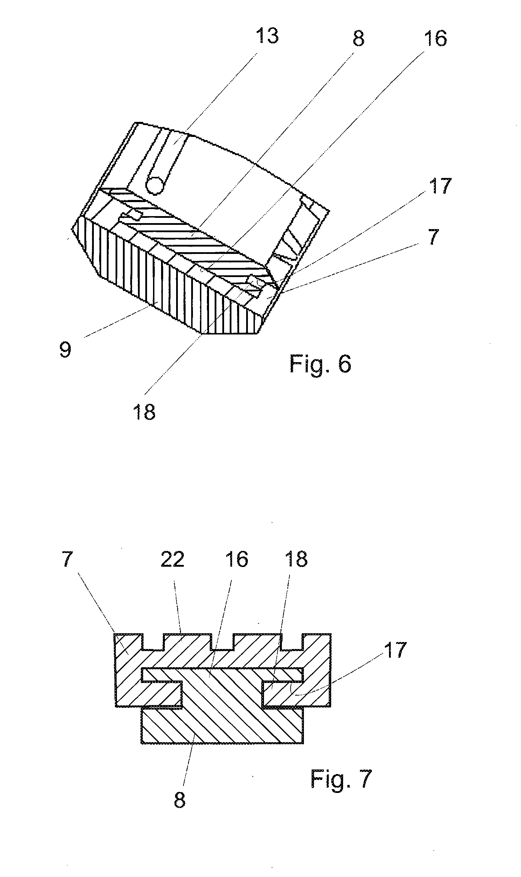

Wie sich aus den Figuren 2 bis 9 ergibt, ist das Druckstück 7 auf einer Führungsbahn 16 des Innenrings 8 geführt in Umfangsrichtung verschiebbar. Die Führungsbahn 16 ermöglicht dabei eine formschlüssige Verbindung zwischen dem Druckstück 7 und dem Innenring 8. Im Ausführungsbeispiel handelt es sich dabei um eine Nut-/Federverbindung. Eine Nut 17 der Nut-/Federverbindung wird dabei durch die Führungsbahn 16 des Innenrings 8 ausgebildet (siehe Figuren 6, 7 und 8). Eine Feder 18 der Nut-/Federverbindung wird entsprechend an der Unterseite des Druckstücks 7 ausgebildet (siehe Figuren 6, 7 und 9). Die formschlüssige Verbindung zwischen dem Druckstück 7 und dem Innenring 8 bzw. der Führungsbahn 16 verläuft auf einer Ringbahn bzw. erstreckt sich über ein Teilstück des Außenumfangs des Innenrings 8.

Wie sich insbesondere aus Figur 4 und Figur 5 ergibt, weist der Außenring 9 wenigstens in einem Teilstück des Abschnitts, in dem das Druckstück 7 federbelastet bewegbar ist, eine schräg (alternativ stufenförmig) verlaufende Anlageflächen 19 auf. Im Ausführungsbeispiel ist eine schräge Anlagefläche 19 vorgesehen, die lediglich zur Verdeutlichung in Fig. 4 mit Stufen dargestellt ist. Durch die schräg verlaufende Anlagefläche 19, durch die der Außenring 9 an seiner Innenseite von einer Kreisform abweicht, wird erreicht, dass sich der Ringspalt 12 in eine Richtung verjüngt, in die das Druckstück 7 federbelastet bewegbar ist. Das Druckstück 7 weist eine an die Anlagefläche 19 angepasste und darauf ausgerichtete schräg (alternativ stufenförmig) verlaufende Anlagefläche 20 auf. Im Ausführungsbeispiel ist eine schräge Anlagefläche 20 vorgesehen, die lediglich zur Verdeutlichung in Figur 4 und Figur 9 mit Stufen dargestellt ist.

Im Ausführungsbeispiel ist die Führungsbahn 16 am Innenring 8 und die Anlagefläche 19 am Außenring 9 ausgebildet. Dies kann jedoch auch genau anders herum realisiert werden und soll hiermit auch im Ausführungsbeispiel mit allen beschriebenen Merkmalen entsprechend analog offenbart sein.

Im Ausführungsbeispiel ist das Druckstück 7 mit der Anlagefläche 20 und die Anlagefläche 19 des Außenrings 9 aus einem Elastomer gebildet. Die elastischen Eigenschaften dieser Elastomere ermöglichen das Grundspiel. D. h. die elastischen Eigenschaften des Druckstücks sowie der Anlagenflächen 19 und 20 ermöglichen es, dass beispielsweise Temperaturausdehnungen sowie Rundlauftoleranzen des Schraubradgetriebes 1 kompensiert werden können. Die elastischen Eigenschaften des Druckstücks 7 und der Anlagenflächen 19, 20 können dadurch unterstützt werden, dass Hohlräume 21 (siehe Figur 5) oder Stege 22 (siehe Figur 7) in dem Druckstück 7 und/oder den Anlageflächen 19, 20 vorgesehen sind. Alternativ können auch Durchbrüche, Nuten oder dergleichen vorgesehen sein.

Wie sich aus Figur 4 und Figur 5 ergibt, ist im Ringspalt 12 zwischen dem Innenring 8 und dem Außenring 9 in einem dem Schwenklager 11 gegenüberliegenden Bereich ein Anschlag 23 eingesetzt. Der Anschlag 23 liegt somit auf einer im Wesentlichen parallel zur Achse des Schraubrads 3 verlaufenden Radialen der Lagerbuchse 6. Der Außenring 9 weist eine Aufnahme bzw. eine Bohrung auf, in die der Anschlag 23 eingesetzt werden kann. Durch den Anschlag 23 wird der Ringspalt 12 zwischen dem Innenring 8 und dem Außenring 9 so weit reduziert, dass der Innenring 8 keine nennenswerte Bewegung in Richtung auf den Außenring 9 in diesem Bereich ausführen kann. Insgesamt wird somit durch das Schwenklager 11 und den Anschlag 23 eine Bewegung des Innenrings 8 in Achsrichtung des Schraubrads 3 bzw. in Querrichtung zu der gewünschten Schwenkbewegung weitgehend unterbunden. Die Bewegung des Innenrings 8 wird somit im Wesentlichen auf die gewünschte Schwenkbewegung reduziert, die durch das Schwenklager 11 vorgegeben wird und durch die es möglich ist, dass sich das Schraubritzel 2 in Richtung auf das Schraubrad 3 bewegt.

Wie sich insbesondere aus den Figuren 2, 3, 4, 8 und 9 ergibt, ist ein Sicherungsbolzen 24 vorgesehen, welcher das Druckstück 7 gegenüber dem Innenring 8 unbeweglich fixiert. Der Sicherungsbolzen 24 ragt dabei über das Gehäuse 10 hinaus. Durch den Sicherungsbolzen 24 wird eine "nicht aktive Position", d. h. der Anlieferzustand, fixiert. Durch den Sicherungsbolzen 24 wird vermieden, dass das Druckstück 7 aufgrund der Ringfeder 13 verschoben werden kann. Wie sich aus Figur 4, Figur 8 und Figur 9 ergibt, weisen das Druckstück 7 und der Innenring 8 (an einer überstehenden Nase 25 seiner Führungsbahn 16) Bohrungen 26 auf, in die der Sicherungsbolzen 24 eingeschoben werden kann.

### Bezugszeichenliste

- 1: Schraubradgetriebe
- 2: Schraubritzel
- 3: Schraubrad
- 4: Wälzlager (festlagerseitig)
- 5: Wälzlager (loslagerseitig)
- 6: Lagerbuchse
- 7: Druckstück
- 8: Innenring
- 8a: Aussparung des Innenrings 8
- 9: Außenring
- 10: Gehäuse
- 11: Schwenklager
- 12: Ringspalt
- 13: Ringfeder
- 14: Nut (Innenring 8)
- 15: Nut (Druckstück 7)
- 16: Führungsbahn (von 8)
- 17: Nut (der Nut-/Federverbindung)
- 18: Feder (der Nut-/Federverbindung)
- 19: Anlagefläche (des Außenrings 9)
- 20: Anlagefläche (des Druckstücks 7)
- 21: Hohlräume
- 22: Stege
- 23: Anschlag
- 24: Sicherungsbolzen
- 25: Nase der Führungsbahn 16
- 26: Bohrungen für den Sicherungsbolzen

## Patentansprüche

1. Schraubradgetriebe für eine Lenkung eines Kraftfahrzeuges mit einem Schraubritzel (2), welches in ein Schraubrad (3) eingreift, und mit einer Lagerbuchse (6), welche ein Lager (4) des Schraubritzels (2) aufnimmt, **dadurch gekennzeichnet, dass** ein Innenring (8) der Lagerbuchse (6) mit einem Außenring (9) der Lagerbuchse (6) über ein Schwenklager (11) derart verbunden ist, dass eine Schwenkbewegung des Schraubritzels (2) zu dem Schraubrad (3) möglich ist, wobei zwischen dem Innenring (8) und dem Außenring (9) der Lagerbuchse (6) ein Druckstück (7) angeordnet ist und wobei das Druckstück (7) federbelastet in einem Abschnitt eines Ringspaltes (12) zwischen dem Innenring (8) und dem Außenring (9) bewegbar ist, wobei der Innenring (8) und/oder der Außenring (9) in dem Abschnitt so gestaltet sind, dass sich der Ringspalt (12) zwischen dem Innenring (8) und dem Außenring (9) in die Richtung, in die das Druckstück (7) federbelastet bewegbar ist, verjüngt.

2. Schraubradgetriebe nach Anspruch 1, **dadurch gekennzeichnet, dass** der Innenring (8) und/oder der Außenring (9) wenigstens in einem Teilstück des Abschnitts, in dem das Druckstück (7) federbelastet bewegbar ist, eine schräg oder stufenförmig verlaufende Anlagefläche (19) aufweist.

3. Schraubradgetriebe nach Anspruch 2, **dadurch gekennzeichnet, dass** das Druckstück (7) eine an die Anlagefläche (19) des Innenrings (8) oder des Außenrings (9) angepasste und darauf ausgerichtete schräg oder stufenförmig verlaufende Anlagefläche (20) aufweist.

4. Schraubradgetriebe nach einem der Ansprüche 1 bis 3, **dadurch gekennzeichnet, dass** das Druckstück (7) auf einer Führungsbahn (16) auf dem Außenumfang des Innenrings (8) oder dem Innenumfang des Außenrings (9) geführt verschiebbar ist.

5. Schraubradgetriebe nach Anspruch 4, **dadurch gekennzeichnet, dass** die Führungsbahn (16) eine formschlüssige Verbindung zwischen dem Druckstück (7) und dem Innenring (8) oder dem Außenring (9) ermöglicht.

6. Schraubradgetriebe nach einem der Ansprüche 1 bis 5, **dadurch gekennzeichnet, dass** eine Feder (13) vorgesehen ist, wobei ein Ende der Feder (13) am Innenring (8) oder Außenring (9) und das andere Ende am Druckstück (7) angreift.

7. Schraubradgetriebe nach einem der Ansprüche 1 bis 6, **dadurch gekennzeichnet, dass** ein Sicherungsbolzen (24) vorgesehen ist, welcher das Druckstück (7) gegenüber dem Innenring (8) oder dem Außenring (9) unbeweglich fixiert.

8. Schraubradgetriebe nach einem der Ansprüche 2 bis 7, **dadurch gekennzeichnet, dass** das Druckstück (7) und/oder die Anlagefläche (19) des Innenrings (8) und/oder des Außenrings (9) aus einem Elastomer gebildet ist.

9. Schraubradgetrieben nach einem der Ansprüche 1 bis 8, **dadurch gekennzeichnet, dass** das Druckstück (7) und/oder die Anlagefläche (19) des Innenrings (8) und/oder des Außenrings (9) Nuten und/oder Durchbrüche und/oder Hohlräume (21) und/oder Stege (22) aufweist.

10. Elektrische Hilfskraftlenkung für Kraftfahrzeuge mit einem Schraubradgetriebe nach einem der Ansprüche 1 bis 9.

## Claims

1. Helical gear mechanism for a steering system of a motor vehicle having a helical pinion (2) which engages into a helical gear (3), and having a bearing bush (6) which receives a bearing (4) of the helical pinion (2), **characterized in that** an inner ring (8) of the bearing bush (6) is connected to an outer ring (9) of the bearing bush (6) via a pivoting bearing (11) in such a way that a pivoting movement of the helical pinion (2) with respect to the helical gear (3) is possible, a pressure piece (7) being arranged between the inner ring (8) and the outer ring (9) of the bearing bush (6), and it being possible for the pressure piece (7) to be moved in a spring-loaded manner in a section of an annular gap (12) between the inner ring (8) and the outer ring (9), the inner ring (8) and/or the outer ring (9) being configured in the section in such a way that the annular gap (12) between the inner ring (8) and the outer ring (9) tapers in the direction, in which the pressure piece (7) can be moved in a spring-loaded manner.

2. Helical gear mechanism according to Claim 1, **characterized in that** the inner ring (8) and/or the outer ring (9) has a bearing face (19) which runs obliquely or in a stepped manner at least in a part of the section, in which the pressure piece (7) can be moved in a spring-loaded manner.

3. Helical gear mechanism according to Claim 2, **characterized in that** the pressure piece (7) has a bearing face (20) which is adapted to the bearing face (19) of the inner ring (8) or of the outer ring (9), is oriented with respect thereto, and runs obliquely or in a stepped manner.

4. Helical gear mechanism according to one of Claims 1 to 3, **characterized in that** the pressure piece (7) can be displaced in a guided manner on a guide track (16) on the outer circumference of the inner ring (8) or the inner circumference of the outer ring (9).

5. Helical gear mechanism according to Claim 4, **characterized in that** the guide track (16) makes a positively locking connection possible between the pressure piece (7) and the inner ring (8) or the outer ring (9).

6. Helical gear mechanism according to one of Claims 1 to 5, **characterized in that** a spring (13) is provided, one end of the spring (13) acting on the inner ring (8) or outer ring (9) and the other end acting on the pressure piece (7).

7. Helical gear mechanism according to one of Claims 1 to 6, **characterized in that** a securing bolt (24) is provided which fixes the pressure piece (7) immovably with respect to the inner ring (8) or the outer ring (9).

8. Helical gear mechanism according to one of Claims 2 to 7, **characterized in that** the pressure piece (7) and/or the bearing face (19) of the inner ring (8) and/or of the outer ring (9) are/is formed from an elastomer.

9. Helical gear mechanisms according to one of Claims 1 to 8, **characterized in that** the pressure piece (7) and/or the bearing face (19) of the inner ring (8) and/or of the outer ring (9) have/has grooves and/or apertures and/or cavities (21) and/or webs (22).

10. Electric power steering system for motor vehicles having a helical gear mechanism according to one of Claims 1 to 9.

## Revendications

1. Engrenage hélicoïdal pour une direction de véhicule automobile, comprenant un pignon hélicoïdal (2) qui vient en prise dans une roue à denture hélicoïdale (3), comprenant une douille palier (6) qui reçoit un palier (4) du pignon hélicoïdal (2), **caractérisé en ce qu'**une bague intérieure (8) de la douille palier (6) est connectée à une bague extérieure (9) de la douille palier (6) par le biais d'un palier pivotant (11) de telle sorte qu'un mouvement de pivotement du pignon hélicoïdal (2) par rapport à la roue à denture hélicoïdale (3) soit possible, une pièce de pression (7) étant disposée entre la bague intérieure (8) et la bague extérieure (9) de la douille palier (6) et la pièce de pression (7) pouvant être déplacée de manière sollicitée par ressort dans une portion d'une fente annulaire (12) entre la bague intérieure (8) et la bague extérieure (9), la bague intérieure (8) et/ou la bague extérieure (9) étant configurées dans la portion de telle sorte que la fente annulaire (12) entre la bague intérieure (8) et la bague extérieure (9) se rétrécisse dans la direction dans laquelle la pièce de pression (7) peut être déplacée de manière sollicitée par ressort.

2. Engrenage hélicoïdal selon la revendication 1, **caractérisé en ce que** la bague intérieure (8) et/ou la bague extérieure (9), au moins dans une section partielle de la portion dans laquelle la pièce de pression (7) peut être déplacée de manière sollicitée par ressort, présentent une face d'appui (19) s'étendant obliquement ou sous forme étagée.

3. Engrenage hélicoïdal selon la revendication 2, **caractérisé en ce que** la pièce de pression (7) présente une face d'appui (20) adaptée à, et orientée vers, la face d'appui (19) de la bague intérieure (8) ou de la bague extérieure (9) et s'étendant obliquement ou sous forme étagée.

4. Engrenage hélicoïdal selon l'une quelconque des revendications 1 à 3, **caractérisé en ce que** la pièce de pression (7) peut être déplacée de manière guidée sur une piste de guidage (16) sur la périphérie extérieure de la bague intérieure (8) ou sur la périphérie intérieure de la bague extérieure (9).

5. Engrenage hélicoïdal selon la revendication 4, **caractérisé en ce que** la piste de guidage (16) permet une connexion par engagement par correspondance de forme entre la pièce de pression (7) et la bague intérieure (8) ou la bague extérieure (9).

6. Engrenage hélicoïdal selon l'une quelconque des revendications 1 à 5, **caractérisé en ce qu'**un ressort (13) est prévu, une extrémité du ressort (13) venant en prise au niveau de la bague intérieure (8) ou de la bague extérieure (9) et l'autre extrémité venant en prise au niveau de la pièce de pression (7).

7. Engrenage hélicoïdal selon l'une quelconque des revendications 1 à 6, **caractérisé en ce qu'**un boulon de fixation (24) est prévu, lequel fixe de manière immobile la pièce de pression (7) par rapport à la bague intérieure (8) ou la bague extérieure (9).

8. Engrenage hélicoïdal selon l'une quelconque des revendications 2 à 7, **caractérisé en ce que** la pièce de pression (7) et/ou la face d'appui (19) de la bague intérieure (8) et/ou de la bague extérieure (9) sont formées d'un élastomère.

9. Engrenage hélicoïdal selon l'une quelconque des revendications 1 à 8, **caractérisé en ce que** la pièce de pression (7) et/ou la face d'appui (19) de la bague intérieure (8) et/ou de la bague extérieure (9) présentent des rainures et/ou des orifices et/ou des cavités (21) et/ou des nervures (22).

10. Direction assistée électrique pour véhicules automobiles comprenant un engrenage hélicoïdal selon l'une quelconque des revendications 1 à 9.
